# EUROPEAN PATENT APPLICATION

(11) **EP 3 848 201 A1**
(43) Date of publication of application: **14.07.2021**
(21) Application number: 20000011.5
(22) Date of filing: 13.01.2020
(51) Int. Cl.: B33Y 70/00, C08J 9/28

(54) **PRINTING OF INHERENTLY POROUS THREE-DIMENSIONAL POLYMER OBJECTS**

(71) Applicant: Karlsruher Institut für Technologie, 76131 Karlsruhe (DE)
(72) Inventor: Levkin, Pavel, 76344 Eggenstein-Leopoldshafen (DE); Wegener, Martin, 76227 Karlsruhe (DE); Dong, Zheqin, 76344 Eggenstein-Leopoldshafen (DE); Mayer, Frederik, 76131 Karlsruhe (DE)

(57) **Abstract**

The present invention relates to printing of inherently porous 3D polymer objects using a template-free 3D printing method. During the printing process, projection stereolithography or two-photon 3D direct laser writing is combined with photopolymerization-induced phase separation using a suitable solvent as porogen. The pore size, porosity and chemical functionality of the 3D structures can be readily tuned by adjusting the photoresist compositions. It is possible to prepare porous 3D structures with pore sizes in the meso- and macro-range having specific geometries and architectures.

## Description

The present invention relates to printing of inherently porous three-dimensional (3D) polymer objects.

3D printing, also known as additive manufacturing, has emerged as a versatile technology platform for computer assisted design and rapid manufacturing during the last decades. Among various 3D printing techniques, stereolithography is a photochemical process where a light source (a laser or projector) induces a chemical reaction in the photoresist, mediated by a molecule known as a photoinitiator that is mixed into the resist at concentrations of around 1%. The reaction converts the monomers in the liquid photoresist into cross-linked solid polymers. The polymers thus formed build up the body of a three-dimensional object (S. C. Ligon et al., Chemical Reviews 2017, 117, 10212 - 10290). Porous polymers, being famous for their all-organic components, tailored pore structures, adjustable chemical components, their light weight and high surface area, have attracted an increasing level of research interest in a large number of applications, including gas adsorption/storage, separation and filtration, catalysis, environmental remediation, energy, optoelectronics, sensing devices, actuators, and biomedicine (J. Wu et al., Advanced Materials 2019, 31, 1802922).

Projection stereolithography is capable of rapidly fabricating highly complex 3D microstructures in a layer-by-layer fashion. Projection stereolithography utilizes a digital display technology as a dynamic mask generator, which works as a virtual photomask with digitally and dynamically configured patterns. This technique allows for rapid photo-polymerization of the entire layer with a flash of UV illumination at micro scale resolution. Also, as a digital dynamic mask can control light intensity at a single pixel level, crosslinking density, thus material properties, of the fabricated structure can be tailored with desired spatial distribution. Wide variety of functional material sets are available including polymers, responsive hydrogels, shape memory polymers and bio-materials (http://web.mit.edu/nanophotonics/projects/pusl.htm, accessed 2020-01-08).

In Mask-image-projection-based stereolithography, a 3D digital model is designed using a computer-aided design tool and is sliced by a set of horizontal planes. Each slice is converted into a two-dimensional mask image. The mask image is then projected onto a photocurable liquid resin surface and light is projected onto the resin to cure it in the shape of the layer. In research systems, the light is projected from below, allowing the resin to be quickly spread into uniform thin layers, reducing production time from hours to minutes (https://www.kurzweilai.net/3d-printing-multi-material-objects-in-minutes-instead-of-hours-to-minutes, accessed 2020-01-08).

Two-photon 3D direct laser writing provides an easy platform to fashion microstructures with a diverse set of materials such as polymers, ceramics, inorganic and organic-inorganic hybrid materials. The scalable and fast fabrication (peak printing rates of more than ∼10⁶ voxels per second) of structures on different substrates at high resolutions with good reproducibility is a prerequisite for widespread adaptation of 3D direct laser writing as a manufacturing method. Fabrication of micro- and mesoscale structures (having overall structure sizes in the scale of millimeters with smallest features down to tens of nanometers) have been studied to explore the possibility of industrial-scale production of micro-optical devices. The scale of the largest structure that can be fabricated has also expanded in recent times, with some groups demonstrating centimeter scale structures with the 3D direct laser writing process (C. W. Ha et al., MRS Communications 2019, 9, 53 - 66). Two-photon absorption is crucial for complex 3D structures requiring many different individual exposures - and enables the building of objects with incredibly fine-scale features (V. Hahn et al., Opt. Photonics News October 2019, 28-36).
Two-photon polymerization with ultrashort laser pulses is a nonlinear optical process based on the simultaneous absorption of two photons in a photosensitive material (photoresist). This process changes the photosensitive material, i.e. it leads to a polymerization by activating so-called photoinitiators in the resist. As two-photon absorption is proportional to the square of the intensity, it only takes place in the focus providing high spatial resolution. After illumination of the desired structures inside the photoresist volume and subsequent development - e.g., washing out the non-illuminated regions - the polymerized material remains in the prescribed 3D form. This allows fabrication of any computer-generated 3D structure by direct laser "recording" into the volume of a photosensitive material (https://www.aerotechgmbh.de/media/246109/TwoPhotonPoly.pdf, accessed 2020-01-08).

Polymerization induced phase-separation is the occurrence of phase separation in a multicomponent mixture induced by the polymerization of one or more components. The increase in molecular weight of the reactive component renders one or more components to be mutually immiscible in one another, resulting in spontaneous phase segregation (J. Y. Kim et al., Phys. Rev. Lett. 1993, 71, 2232 - 2236).
Polymerization-induced phase separation technique can afford polymer microstructures by a single-step procedure in a predictable manner. Polymerization-induced phase separation is typically carried out by polymerization of a homogeneous mixture consisting of cross-linkable monomers and porogen solvents, where the solvents are miscible with the monomers but immiscible with the generating network polymers, so that a phase-separated state can be obtained in the course of the polymerization. Subsequent removal of the solvents leaves pores inside the network polymers, and the rigid microporous structure thus obtained faithfully reflects the original phase separation structure. Polymerization induced phase-separation can be initiated either through thermally-induced polymerization or photopolymerization (Q. Tran-Cong-Miyata et al., Polymer International 2017, 66 (2), 213-222).

In Kato *et al.* is described a unique UV light-triggered micro/nanofabrication system for creating superhydrophobic 2D surfaces, where the basic idea underlying this method comes from polymerization-induced phase separation phenomena. A coated precursor consisting of cross-linkable, monomers, porogens (solvents and soluble linear polymers), and a photoinitiator was UV cured on a substrate, followed by quick ethanol flushing to remove the solvents to afford microtextured superhydrophobic coatings. (S. Kato et al., J. Mater. Chem. 2012, 22, 8613 - 8621) .

To date, several photoresists have been proposed for 3D printing of inherent porous polymers. However, in all these techniques, the pore formation in the 3D printed structures relies on addition of templates (e.g., oil, salt or gas) into the photoresists.

In Johnson *et al.* scanning and projection microstereolitho-graphy is successfully applied to the polymerization of high internal phase emulsions. Thus a macroscopic 3D structure can be built up and emulsion templating is used to achieve a controlled porosity on the micron scale. (D. W. Johnson et al., Advanced Materials 2013, 25, 3178 - 3181).

WO2016187097A1 describes a foam ink composition for printing porous structures comprising stabilizing particles and gas bubbles dispersed in a solvent. At least a portion of the stabilizing, particles are positioned at interfacial regions between the solvent and the gas bubbles, thereby stabilizing the gas bubbles in the foam ink composition. A 3D printed hierarchical porous structure comprises one or more continuous filaments arranged in a predetermined pattern on a substrate, the one or more continuous filaments comprising a sintered material and including a porosity of at least about 40 vol.%.

Mu et al. present a new fabrication method to prepare components of porous materials by combining 3D printing with salt leaching. Salt particulates and photocurable resin are mixed and used as the ink. 3D objects are then printed in a customized digital light processing printer. Owing to the interconnection of salt particles in the objects, porous polymeric components can be obtained upon salt leaching. Multiple pore sizes can be achieved by using selectively sieved salt powders in the ink formula. In addition, the porous components can be used as a template for embedding a conductive material to obtain 3D printed objects that function as flexible conductive components. (X. Mu et al., Materials Horizons 2017, 4, 442 - 449) .

WO2018063816A1 discloses a computer-controlled method for forming a composition-controlled product using 3D printing, which includes disposing two or more liquid reactant compositions, e.g. monomers, initiators, porogenic particles, reinforcing particles and solvents, in respective two or more reservoirs; and mixing the two or more liquid reactant compositions, which in turn includes controlling by the computer a mass ratio of the mixed two or more liquid reactant compositions. The porogenic particles in WO2018063816A1 might be water soluble sugars or salts or organic solvent soluble polymer particles. The computer-controlled method further includes scanning, under control of the computer, a mixed liquid reactants nozzle over a substrate; depositing the mixed liquid reactant compositions onto the substrate; and operating, under control of the computer, a light source to polymerize the deposited mixed liquid reactant compositions.

The disadvantages of these templating methods are that they do not only increase the synthetic difficultly and stability of the photoresist, but also complicate the post-development process as the templates are difficult to remove. Furthermore these templating methods usually lead to an optically inhomogeneous reaction medium (the unpolymerized photoresist), i.e. local variations of the refractive index, which consequently causes light scattering. Light scattering is unfavorable for any light-based 3D printing method as light could not penetrate through the medium any more and printing would not be possbile).

The objective technical problem was to provide a template-free 3D printing method to produce inherently porous 3D structures.

The objective technical problem is solved by the embodiments characterized in independent claim 1. Preferred embodiments can be found in the dependent claims.

According to the invention, the preparation of inherently porous 3D structures is realized by combining stereolithography or two-photon 3D direct laser writing with polymerization-induced phase separation using a suitable solvent as porogen.

The preparation method comprises the following steps:
A) Providing a mixture comprising one or more photoactive monomers, at least one porogen solvent and a photoinitiator;
B) Printing a 3D structure with the mixture of step A) by stereolithography or two-photon 3D direct laser writing;
C) Immersing the printed 3D structure in a solvent to remove unreacted monomers, the at least one porogen solvent and the photoinitiator.

In a preferred embodiment the mixture of step A) is sonicated before printing a 3D structure in step B).

In another preferred embodiment the 3D structure is supercritical dried after step C).

The pore size, porosity and chemical functionality of the 3D structures can be readily tuned by adjusting the photoresist compositions.
According to the invention the term photoresist refers to the mixture of one or more photoactive monomers, at least one porogen solvent and the photoinitiator.
With the procedure according to the invention it is possible to prepare inherently porous 3D structures with pore sizes in the meso (2 - 50 nm) and macro (> 50 nm) range (J. Rouquerol et al., Pure and Applied Chemistry 1994, 66 (8), 1739-1758).
According to the invention the term "inherently porous" means that the pores are formed during the polymerization process and that the porosity is dependent on the photoresist mixture and the used monomers. It is not possible to "directly print" the same pore sizes described in the invention with established 3D printing methods.

According to the invention, the one or more photoactive monomers are compounds that can polymerize under the influence of light using a photoinitiator.

In one embodiment the one or more photoactive monomers are selected from acrylate or methacrylate monomers.

In a preferred embodiment the acrylate or methacrylate monomers are selected from methyl (meth)acrylate, ethyl (meth)acrylate, 2-ethylhexyl (meth)acrylate, hydroxyethyl (meth)acrylate, butyl (meth)acrylate, glycidyl (meth)acrylate, 2-(diethylamino)ethyl (meth)acrylate, heptadecafluorodecyl (meth)acrylate, ethylene di(meth)acrylate, poly(ethylene glycol) (meth)acrylate, trimethylolpropane tri(meth)acrylate, pentaerythritol tri(meth)acrylate, poly(ethylene glycol) di(meth)acrylate, urethane (meth)acrylate and epoxy (meth)acrylate.

Hydrophobic acrylate or methacrylate monomers such as 2-ethylhexyl (meth)acrylate, butyl methacrylate and heptadecafluorodecyl (meth)acrylate are particularly suitable for the preparation of superhydrophobic or non-wettable 3D structures with arbitrary geometries and shapes.

Hydrophilic acrylate or methacrylate monomers such as hydroxyethyl (meth)acrylate, poly(ethylene glycol) (meth)acrylate, poly(ethylene glycol) di(meth)acrylate and pentaerythritol triacrylate are particularly suitable for the preparation of highly hydrophilic 3D structures.

Hydroxyethyl methacrylate and pentaerythritol triacrylate monomers are biocompatible and are particularly suitable for fabrication of 3D scaffolds for cell culture.

Glycidyl acrylate or methacrylate monomers are particular suitable for the preparation of reactive 3D structures that can be readily functionalized.

Amino methacrylate or sulfate methacrylate monomers are particular suitable for the preparation of superabsorbents for removal of dyes and metals.

In another embodiment the photoactive monomers are selected from at least one thiol monomer and at.least one alkene or alkyne monomer. Aside from the advantages of thiol-ene/yne materials such as the ability to prepare ideal, homogenous networks, thiolene/yne monomers are less sensitive to oxygen inhibition, and the thiol-ene/yne networks undergo less polymerization shrinkage and exhibit reduced shrinkage stress (A. B. Lowe, Polym. Chem. 2014, 5, 4820-4870; B. D. Fairbanks et al., Macromolecules 2009, 42, 1, 211-217).
In a preferred embodiment, the at least one thiol monomer is selected from 2,2'-(ethylenedioxy)diethanethiol, trimethylolpropane tris(3-mercaptopropionate) and pentaerythritol tetrakis(3-mercaptopropionate). In another preferred embodiment the at least one alkenes/alkyne monomer is selected from 1,7-octadiene, 1,3,5-triallyl-1,3,5-triazine-2,4,6(1H, 3H, 5H)-trione, tetravinylsilane, 1,6-heptadiyne, 1,7-octadiyne and 1,8-nonadiyne.

Photoinitiators are compounds that produce reactive species (free radicals, cations or anions) when exposed to radiation (UV or visible). These then react with monomers and / or oligomers to initiate polymer chain growth (https://polymerdatabase.com/polymer%20chemistry/Photoinitiato rs1.html, accessed 2020-01-08).

Suitable photoinitiators for a radical polymerization according to the invention are Norrish type I initiators that cleaves to generate radicals when irradiated with UV or visible light energy. Norrish type I initiators are for example phosphine oxides, 2,2-dimethoxy-2-phenylaceto-phenone, hydroxyacetophenones, such as 2-hydroxy-2-methyl-1-phenylpropanone or aminoacetophenones, like 2-benzyl-2-dimethylamino-4-morpholino-butyrophenone (https://www.lambson.com/ugc-1/uploads/pageblocks/67/a2e24ccc3348f5bc306ac8cc836a5249.pdf, accessed 2020-01-08).

In one embodiment the photoinitiator is an acylphosphine oxide. Acylphosphine oxides are well known photoinitiators for the radical photo-polymerization of ethylenically unsaturated compounds, namely acrylates or methacrylates, upon UV or visible light exposure. Monoacylphosphine oxides, such as 2,4,6-trimethyl-benzoyldiphenylphosphine oxide and ethyl (2,4,6-trimethylbenzoyl) phenyl phosphinate, and bisacylphosphine oxides such as bis(2,4,6-trimethylbenzoyl)-phenylphosphineoxide (Irgacure 819) have been commercially available for a number of years (https://radtech.org/2014proceedings/papers/technical-conference/Photoinitiator/Sehnal%20-%20Novel%20Phosphine%20Oxide%20Photoinitiators.pdf, accessed 2020-01-08).

In a preferred embodiment the photoinitiator is bis(2,4,6-trimethylbenzoyl)phenylphosphineoxide (Irgacure 819). Irgacure 819 is suitable because it matches the emission spectrum of the 3D printer used in the invention and it has a good two-photon-absorption cross section at the used laser wavelength for two-photon 3D direct laser writing.

Other suitable photoinitiators for the radical polymerization are Norrish type II initiators. Norrish type II photoinitiators, when irradiated by UV-light, need a hydrogen donor to react. Most commonly these hydrogen donors are amines (amine synergists). By UV-irradiation the type II photoinitiator abstracts a hydrogen atom from the employed synergist forming two radicals. These radicals can then initiate the polymerization reaction (https://www.photoinitiators-platform. org/about-photoinitiators/, accessed 2020-01-08). A suitable Norrish type II initiator is 7-diethylamino-3-thenoylcoumarin (J. Fischer et al., Opt. Mater. Express, 2011, 1, 614-624).

A porogen solvent is a pore generating solvent which attributes to polymer properties. Porogen solvents do not react chemically during the radical polymerization process - they are inert. The porogen selection depends on the polarity and solubility parameter of the monomer, polymer and porogen and interaction between them. The surface area and pore volume is significantly influenced by a porogen, porogen pair or their amount (S. Mane, Canadian Chemical Transactions 2016, 4, 2, 210-225).

The criteria for choosing porogenic solvents is often based on their respective molecular size, alkyl chain length, mixtures of lipophilic and hydrophilic porogens, and solubility parameter. The solubility parameter was identified as a quantitative criterion for predicting the pore structure properties of polymers. As a general rule, polymerization-induced phase separation will occur at a much later stage if the porogen is a "good" solvent or a solvating diluent, i.e., miscible with both the monomer and its resulting polymer. Non-solvating porogens have poor miscibility at polymer level.
In addition to the porogen type, porogen amount with respect to monomer-crosslinker composition is also one of the most important parameters which influence the polymer porosity. Pore size can be controlled by adjusting the porogen amount. A small amount of porogen generates fewer pores with a small pore size whereas a large amount of porogen generates a greater number of pores with greater pore size. A greater amount of a solvating porogen increases the surface area and microporosity whereas a higher amount of a non-solvating porogen increases the macroporosity and decreases the surface area. (M. H. Mohamed et al., Nanomaterials 2012, 2, 163-186).

According to the invention, the at least one porogen solvent can be any solvent that is miscible with the monomer but immiscible with the polymer. Possible porogens include cyclic alcohols and the respective ester, ether and ketons thereof, long-chain alcohols and the respective ester and ether thereof, tetrahydrofuran, acetonitrile, toluene, chlorobenzene, alkanes, dimethylformamide, dimethyl sulfoxide and a mixture thereof.

In a preferred embodiment the at least one porogen solvent is cyclohexanol, cylohexanone, n-decanol, n-octanol, dodecyl acetate, octadecyl acetate, butyl acetate or a mixture thereof.

The at least one porogen solvent is removed by immersing the 3D structure after printing in a suitable solvent without further complex post-development steps. According to the invention any solvent that is miscible with the at least one porogen and the monomers can be used in the immersing step, such as short-chain alcohols, acetone, esters, hexane, tetrahydrofuran and chloroform.

In one embodiment of the invention the porous 3D structures are printed by projection stereolithography.
According to the invention a 3D printer based on projection stereolithography is used to print the porous 3D structures. A solid 3D model is designed using a computer-aided design tool and digitally sliced into a series of 2D layers.
The photoresist, comprising one or more monomers, at least one porogen solvent and a photoinitiator, is filled in the tank of the 3D printer. Optionally the photoresist is sonificated before being filled in the tank of the 3D printer.
The digitally generated 2D layers are used as masks for the photo projection process during which the polymerization of the photoactive monomers takes place. During the 3D printing process, individual solid layers are created until the 3D object is finished.
According to the invention, during the 3D printing process, the light exposure time for each layer is 1 - 100 seconds, preferably 2 - 20 seconds, the lift height is 10 µm - 1000 µm, preferably 20 - 200 µm and the curing time for each layer lies between 1 s to 100 s. Thus the structure is built at a speed of 5 - 200 mm/h, preferably 10 - 20 mm/h. The light source of the 3D printer is preferably a gas-discharge lamp or a LED light. The wavelength of the light source of the 3D printer is in the range of 254 nm to 500 nm, and the light intensity is in the range of 1 mW/cm² to 100 mW/cm².

After 3D printing, the printed structure is immersed with a suitable solvent such as acetone to remove the unreacted monomers, porogens and photoinitiators.

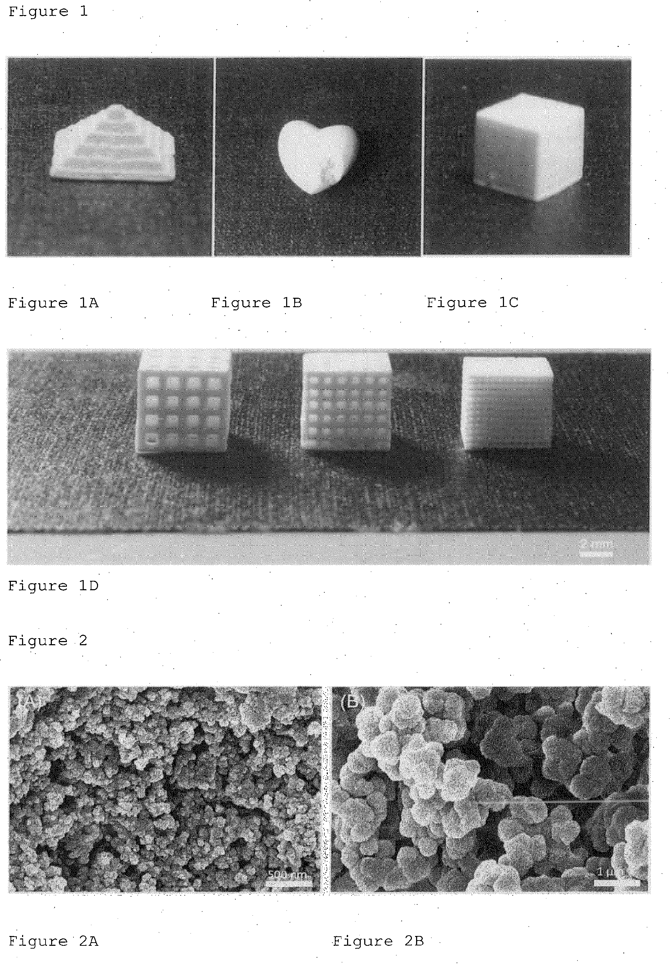

With the projection stereolithography method according to the invention 3D structures including a pyramid, a heart and hollow cubes can be readily printed. These 3D printed structures have a white appearance (cf. figure 1), indicating their porous internal structures.

The inspection of cross-sections of the 3D structures shown in figure 1 reveals that they have porous internal structures with pore sizes of several hundred nanometers up to the micrometer range (cf. figure 2). The internal pore size of the 3D structures is tuned by changing the porogen composition in the photoresist. Changing the content of cyclohexanol from 40 wt% to 10 wt% in the photoresist significantly increases the pore sizes of printed structures (cf. figure 2).

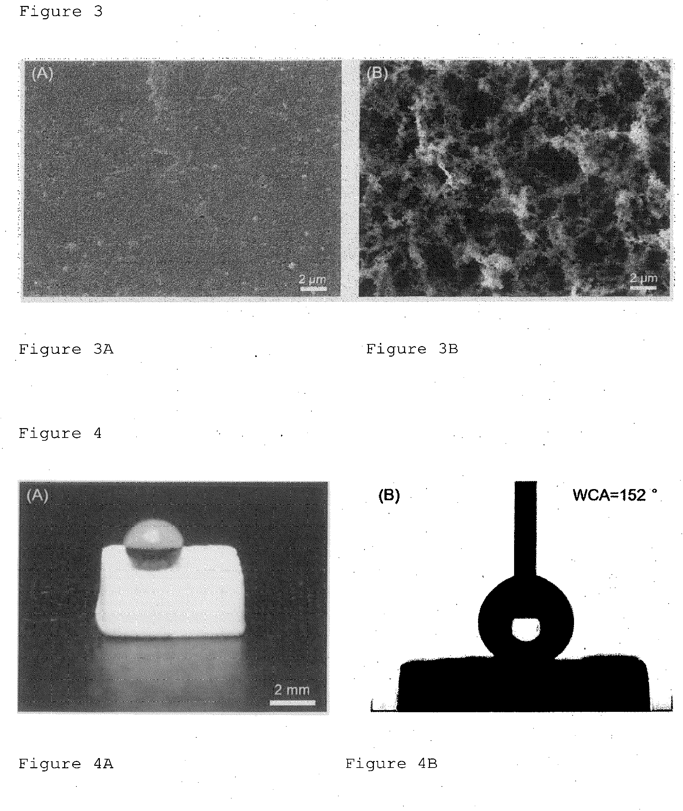

Using hydrophobic photoactive monomers such as butyl methacrylate during the 3D printing process, 3D objects with a superhydrophobic surface can be produced. The surface has a water static contact angle of at least 140°, preferably greater than 150°, more preferably greater than 160°, most preferably greater than 170°. The surface has a water sliding angle of at most 20°, preferably at most 10°, most preferably at most 5°. (cf. figure 4). Such an excellent superhydrophobicity is attributed to the synergistic effects of the hydrophobic side chains in the hydrophobic polymer and the highly porous surface formed during the 3D printing process.

Optionally the structure is supercritically dried after the immersing step C). The supercritical drying is preferably performed with CO₂. According to the invention, after step C) the 3D object together with acetone is placed in a closed chamber, followed by exchanging the solvent with CO₂ at 10 °C several times to reach a pressure of 50 bar. Then the chamber temperature and pressure is increased to 35 °C and 85 bar, respectively. Finally, the chamber pressure is gradually dropped to atmosphere pressure for releasing the CO₂.

The drying process is advantageous to maintain the surface porosity of the printed 3D structures. If the 3D structures are dried in air, the surface pores may collapse due to the high capillary forces generated in the evaporation process (cf. figure 3A). After supercritical drying of the printed 3D structures, their surface porosity is reserved (cf. figure 3B).

In another embodiment of the invention the porous 3D structures are printed by two-photon 3D direct laser writing.

According to the invention a 3D printer based on two-photon 3D direct laser writing is used to print the porous 3D structures. A solid 3D model is designed using a computer-aided design tool and digitally sliced into a series of 2D layers.

The photoresist, comprising one or more monomers, at least one porogen solvent and a photoinitiator, is put as a droplet onto a substrate. Optionally the photoresist is sonificated before being put as a droplet on the substrate.

For writing the desired 3D structure an objective lens is directly immersed into the photoresist. A laser beam is then focused into the photoresist. For efficient two-photon-absorption in the photoresist a pulsed laser is employed. The laser used according to the invention exhibits a central wavelength of 700 nm to 900 nm, a pulse duration between 50 fs and 1 ps, and a repetition rate around 80 MHz. According to the invention, for the objective lenses, high-numerical-aperture objectives are used with numerical apertures between 0.5 and 1.5. The magnification of the objective lenses ranges from 10x to 100x.

When the laser beam is focused into the liquid photoresist a polymerization reaction is triggered in the focal region by two-photon absorption of the photoinitiator and subsequent radical formation. Two- or multiphoton absorption yields an improved confinement of the excitation in all spatial directions, as compared to one-photon-absorption. By moving the laser focus in the droplet of the photoresist in all directions while controlling and adapting the optical power, arbitrary 3D structures can be created. The 3D movement of the laser focus through the photoresist is controlled using a computer. In a preferred embodiment, this is performed by using galvanometric mirrors or micro-electro-mechanical-based mirrors to deflect the laser beam, thus scanning the laser beam through the droplet of the photoresist without moving the sample. In this fashion, the laser beam can be scanned perpendicular to the optical axis. The scanning speed ranges from 10 µm/s to 50 cm/s. Movement in parallel to the optical axis is performed using mechanical or piezo-driven stages. In another embodiment, the sample is moved three-dimensionally through the spatially fixed laser focus using mechanical or piezo-based stages.

According to the invention the photoresist is exposed to radiation in a layer-by-layer fashion. In this case, first, a single layer is written by writing parallel lines with a spacing (called the "hatching distance") between 100 nm and 2.5 µm. Then, the next layer is written with a layer-to-layer spacing ("slicing distance") of 200 nm to 10 µm.
By scanning and properly modulating the printer laser, polymerization occurs at the focal spot of the laser and can be controlled to create an arbitrary three-dimensional periodic or non-periodic pattern.

According to the invention, a writing velocity of 10 µm/s to 50 cm/s and optical powers of the writing laser between 1 mW and 200 mW, preferably between 20 mW and 50 mW, are used.

After 3D printing by two-photon 3D direct laser writing, the printed structure is immersed with a suitable solvent such as acetone to remove the unreacted monomers, porogens and photoinitiators.
Optionally the structure printed by two-photon 3D direct laser writing is supercritically dried. The supercritical drying is preferably performed with CO₂.

Spatially inhomogeneous porosities in written structures were observed while 3D printing by two-photon 3D direct laser writing using acrylates or methacrylates as photoactive monomers in normal air atmosphere. These were due to a local depletion of the oxygen concentration in the proximity of written structures in the photoresist droplet, during two-photon 3D direct laser writing. The reason for this lies in the fact that during the polymerization of acrylates or methacrylates, typically, oxygen is consumed. The local concentration of oxygen in turn affects the polymerization kinetics and therefore influences parameters like the polymerization threshold power (which is the optical power needed to polymerize the photoresist). Thus, local variations in the oxygen concentration lead to inhomogeneous results.
To avoid those inhomogeneities, in a preferred embodiment of the invention the oxygen is removed from the whole reaction medium by bubbling the photoresist with nitrogen prior to 3D printing, and by keeping the sample under nitrogen during the printing process. In another preferred embodiment, dummy structures are printed onto the sample at the start of each printing job to remove residual oxygen from the system.

For two-photon 3D direct laser writing, having a constant refractive index or only small local variations of the refractive index is of utmost importance. If this condition is not fulfilled, the laser focus is strongly disturbed, making controlled 3D printing impossible. According to the invention, before polymerization, the photoresists have a constant refractive index. After light exposure, hence after local demixing, the emerging refractive index contrast is very small. Only after washing the sample in solvents and optional supercritical point drying, the resulting refractive index contrast is pronounced. Therefore, the process according to the invention is distinct from mixing high-refractive-index nanoparticles into the photoresist containing the photoactive monomers. Furthermore, the process according to the invention is distinct from sol-gel processes in which the emulsion exhibits pronounced local variations of the refractive index.

There is a wide range of applications for the 3D structures printed according to the invention, dependent on pore size, shape, overall dimension and chemical or physical properties.

Application examples are 3D printed structures for the use as 3D superhydrophobic or non-wettable materials with arbitrary geometries and shapes, e.g., for self-cleaning, anti-icing, anti-corrosion and anti-fouling, as ultralight 3D printed materials, 3D porous supports for immobilization of catalyst, 3D porous scaffolds for tissue engineering, cell-scaffolds, 3D light-scattering structures for controlling the propagation of scattered light, optical materials, sensing applications based on a large surface to volume ratio, miniaturized integrating spheres (Ulbricht spheres), as permeable structures for chromatography or (micro)fluidics applications, as filtration means, drug release agents, gas storage media and superabsorbents. After a post-functionalization process even electric conductors or broad-band optically absorbing materials are conceivable.
Figure 1 comprising figure 1A, figure 1B, figure 1C and figure 1D shows 3D structures printed by projection stereolithography using hydroxyethyl methacrylate and ethylene dimethacrylate as photoactive monomers. The 3D printed structures have a white appearance, indicating their porous internal structures.
Figure 2 comprising figure 2A and figure 2B shows cross-sectional scanning electron microscope images of the 3D printed structures presented in figure 1 with changing porogen composition in the photoresist. Figure 2A shows a 3D structure printed with a photoresist with 40 wt% cyclohexanol and 10 wt% n-decanol as porogen solvents; figure 2B shows a 3D structure printed with a photoresist with 10 wt% cyclohexanol and 40 wt% n-decanol as porogen solvents.
Figure 3 shows surface scanning electron microscope images of 3D printed structures dried in air (figure 3A) and in supercritical CO₂ (figure 3B).
Figure 4 shows a superhydrophobic cube printed by using butyl methacrylate as monomer in the photoresist. Figure 4A shows a water droplet positioned on the cube. Figure 4B shows the water contact angle measurement on the cube surface. The water contact angle was 152°.

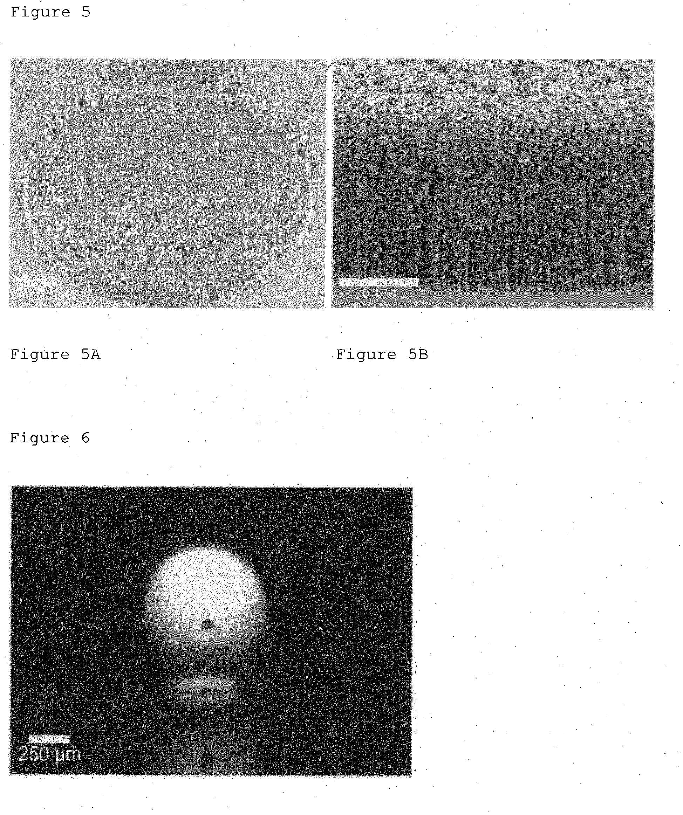

Figure 5 including figure 5A and figure 5b shows a porous cylinder (diameter 350 µm, height 16 µm) printed using two-photon 3D direct laser writing.
Figure 6 shows a dark-field optical microscopy image of a miniaturized integrating sphere printed onto a glass coverslip using 3D two-photon direct laser writing (hollow sphere, outer diameter 800 µm, inner diameter 400 µm, hole diameter 80 µm). The white appearance indicates a high reflectivity of the printed material. At the bottom, the reflection of the printed structure at the coverslip is visible.

### Examples:

### Projection stereolithography:

### Example 1:

The photoresist for projection stereolithography according to figure 2A was prepared by mixing 29.7 wt% hydroxyethyl methacrylate and 19.8 wt% ethylene dimethacrylate as monomers, 39.6 wt% cyclohexanol and 9.9 wt% n-decanol as porogens, and 1 wt% bis(2,4,6-trimethylbenzoyl)-phenylphosphineoxide (Irgacure 819) as photoinitiator . The photoresist was sonicated for 30 minutes to obtain a homogenous solution.

The photoresist for projection stereolithography according to figure 2B was prepared by mixing 29.7 wt% hydroxyethyl methacrylate and 19.8 wt% ethylenedimethacrylate as monomers, 9.9 wt% cyclohexanol and 39.6 wt% n-decanol as porogens, and 1 wt% bis(2,4,6-trimethylbenzoyl)-phenylphosphineoxide (Irgacure 819) as photoinitiator. The photoresist was sonicated for 30 minutes to obtain a homogenous solution.

A DLP (digital light processing) 3D printer based on projection stereolithography was used to print the porous 3D structures. A solid 3D model was designed using a computer-aided design tool and digitally sliced into a series of 2D layers, which were then used to control the photo projection to solidify the liquid resin in a tank. The exposure time for each layer was 20 seconds, and the lift height was 50 µm. Thus the structure could be built at a speed of ∼ 10 mm/h.
The light source for the 3D printer is a LED light with a central wavelength of 405 nm, and an intensity of 3 mW/cm².
After printing, the printed structure was immersed in acetone overnight to remove the unreacted monomers and porogens. Then the 3D object together with acetone was placed in a closed chamber, followed by exchanging the solvent with CO₂ at 10 °C several times to reach a pressure of 50 bar. Then the chamber temperature and pressure was increased to 35 °C and 85 bar, respectively. Finally, the chamber pressure was gradually dropped to atmosphere pressure for releasing the CO₂. The whole drying process took about 40 min.
The 3D structures prepared according to example 1 are shown in figures 1 and 2.

### Example 2:

In this example, the hydrophobic monomer butyl methacrylate was used as the monomer to impart the 3D printed structures with excellent non-wettability. Thus the photoresist was prepared by mixing 29.7 wt% butyl methacrylate and 19.8 wt% ethylene dimethacrylate as monomers, 9.9 wt% cyclohexanol and 39.6 wt% n-decanol as porogens, and 1 wt% bis(2,4,6-trimethylbenzoyl)-phenylphosphineoxide (Irgacure 819) as initiator. The printing process and development process was the same as in example 1.

The 3D structure prepared according to example 2 is shown in figure 4.

Two-photon 3D direct laser writing:

### Example 3.

In this example inherently porous 3D structures were fabricated using two-photon 3D direct laser writing.

The photoresist for 3D direct laser writing was prepared by mixing 2.12 wt% of bis(2,4,6-trimethylbenzoyl)-phenylphosphine-oxide (Irgacure 819), 0.07 wt% of 2, 2, 6, 6-tetramethylpiperidinyloxyl, 52.94 wt% of pentaerythritol triacrylate, 22.43 wt% of dodecyl acetate and 22.43 wt% of octadecyl acetate. The mixture was then homogenized by treating it in an ultrasonic bath for 30 minutes.

Prior to writing, nitrogen was bubbled through the photoresist for 5 minutes.

For writing the photoresist, a commercial 3D direct laser writing system (Photonic Professional GT, Nanoscribe GmbH) was used. A 25x/NA0.8 objective lens (Carl Zeiss) was used which was immersed directly into the photoresist. A writing velocity of 5 cm/s and optical powers of the writing laser between 30 mW and 50 mW were used. The sample was kept under nitrogen atmosphere during the whole printing process. Each printing job was started by writing dummy structures (10 cylinders with a diameter of 350 µm and a height of 100 µm, writing power 50 mW, writing velocity 5 cm/s) onto the sample. Then, the actual structures were written. After UV or visible light exposure, the samples were immersed into acetone for 30 minutes. This was followed by supercritical point drying. Here, the printed sample together with acetone was placed in a closed chamber, followed by exchanging the solvent with CO₂ at 10 °C several times to reach a pressure of 50 bar. Then the chamber temperature and pressure was increased to 35 °C and 85 bar, respectively. Finally, the chamber pressure was gradually dropped to atmosphere pressure for releasing the CO₂. The whole drying process took about 40 min.

## Claims

1. A method for preparing an inherently porous 3D structure using 3D printing,
Comprising the steps of
A) Providing a mixture comprising one or more photoactive monomers, at least one porogen solvent and a photoinitiator;
B) Printing a 3D structure with the mixture of step A) by stereolithography or two-photon 3D direct laser writing;
C) Immersing the printed 3D structure in a solvent to remove unreacted monomers, the at least one porogen solvent and the photoinitiator.

2. A method according to claim 1 wherein the mixture of step A) is sonicated before printing a 3D structure in step B).

3. A method according to the preceding claims wherein the 3D structure is supercritical dried after step C).

4. A method according to the preceding claims wherein the one or more photoactive monomers are selected from acrylate or methacrylate monomers.

5. A method according to claims 1, 2 or 3 wherein the photoactive monomers are selected from at least one thiol monomer and at least one alkene or alkyne monomer.

6. A method according to the preceding claims wherein the porogen solvent is chosen from cyclohexanol, cylohexanone, n-decanol, n-octanol, dodecyl acetate, octadecyl acetate or butyl acetate or a mixture of thereof.

7. A method according to the preceding claims wherein the photoinitiator is selected from phosphine oxides, 2,2-dimethoxy-2-phenylacetophenone, hydroxyacetophenones or aminoacetophenones.

8. A method according to the preceding claims wherein the stereolithography method is projection stereolithography using a DLP (digital light processing) 3D printer.

9. A method according to claim 8 wherein the light source of the 3D printer is a gas-discharge lamp or a LED light with a central wavelength between 254 nm to 500 nm and a light intensity between 1 mW/cm² to 100 mW/cm² and wherein the lift height lies between 10 µm to 1000 µm and the curing time for each layer lies between 1 s to 100 s.

10. A method according to claims 1, 2, 3, 4, 5, 6 or 7 wherein the printing method employed is two-photon 3D direct laser writing.

11. A method according to claim 10 wherein the laser used is a pulsed laser with a central wavelength between 700 and 900 nm and a pulse duration between 50 fs and 1 ps, wherein the optical power lies between 1 mW to 200 mW, the writing velocity lies between 10 µm/s to 50 cm/s and the numerical aperture of the objective lenses lies between 0.5 and 1.5.

12. A method according to claims 10 or 11 wherein two-photon 3D direct laser writing is performed under a nitrogen atmosphere.

13. A method according to claims 10, 11 or 12 wherein 3D printing in step B) is started with printing of dummy structures prior to printing the desired 3D structure.

14. Use of the 3D printed porous structures according to the preceding claims as ultralight materials, supports for immobilization of catalysts, scaffolds for tissue engineering, cell-scaffolds, light-scattering structures, optical materials, sensors, miniaturized integrating spheres (Ulbricht spheres), permeable structures for chromatography or (micro)fluidics applications, filtration means, drug release agents, gas storage media, superabsorbents.

15. Use of the 3D printed porous structures according to the preceding claims as 3D superhydrophobic or non-wettable materials with arbitrary geometries and shapes.
